# EUROPEAN PATENT APPLICATION

(11) **EP 1 176 800 A2**
(43) Date of publication of application: **30.01.2002**
(21) Application number: 01306343.3
(22) Date of filing: 24.07.2001
(51) Int. Cl.: H04N 1/407

(54) **Image reading method, image reader, image reader controlling method and image processing system using improved peak correction**

(30) Priority: 28.07.2000 JP 2000228695
(71) Applicant: Ricoh Company, Tokyo 143-8555 (JP)
(72) Inventor: Koike, Kazumasa, Atsugi-shi, Kanagawa (JP)
(74) Representative: Senior, Alan Murray

(57) **Abstract**

In an image reading method and apparatus of the present invention, a peak level of an image signal, obtained by scanning an original document, is corrected based on a reference level. A plurality of reading modes are provided. A selected one of the plurality of reading modes is received. A reference level is generated by computing a sum of a detection peak level and a correction value suited to the selected reading mode, so that the peak level of the image signal is corrected based on the generated reference level.

## Description

The present invention relates to an image reading method, an image reader, an image reader controlling method which controls the image reader, and an image processing system which processes an image signal output by the image reader.

In an image processing system such as a G3 (group 3) facsimile, an image reader (or image scanner) optoelectrically reads an image from an original document and outputs an image signal indicating the read image. In order to increase the quality of the image read by the image reader, the image processing system generally performs some image correcting computations including a shading correcting computation, a peak correcting computation and an MTF (modulation transfer function) correcting computation.

In the image processing system including the image reader, the shading correcting computation is performed in order to reduce the influences due to the input sensitivity and characteristics of a reading optical system and an image sensor (e.g., a line image sensor). The peak correcting computation is performed in order to ensure the dynamic range of optical intensity of the image read by the image reader. The MTF correcting computation is performed in order to eliminate the blurring of the image read by the image reader.

In a conventional peak correction process, a white reference level signal is produced by optically scanning a white reference plate. It is assumed that the white reference level signal indicates a maximum level of optical intensity of the image read by the image reader. The white reference level signal is latched, and the peak correcting computation is performed such that a peak level of the image signal, obtained by reading the original document, is corrected based on the latched white reference level signal.

However, when the image actually read from the original document contains stains in the background portion, the stains in the background portion are emphasized as the result of the conventional peak correction process, which will degrade the quality of the reproduced image. Moreover, when the image actually read from the original document is of a certain type and the conventional peak correction process is performed, white scattering may occur in the reproduced image, which will also degrade the quality of the reproduced image.

An object of the present invention is to provide an improved image reading method in which the above-described problems are eliminated.

Another object of the present invention is to provide an image reading method that provides an adjustable reference level for the peak correction process, which is dependent on the reading mode when reading the original document.

Another object of the present invention is to provide an image reader that provides an adjustable reference level for the peak correction process, which is dependent on the reading mode when reading the original document.

Another object of the present invention is to provide an image reader controlling method that provides an adjustable reference level for the peak correction process, which is dependent on the reading mode when reading the original document.

Another object of the present invention is to provide an image processing system including an image reader that provides an adjustable reference level for the peak correction process, which is dependent on the reading mode when reading the original document.

The above-mentioned objects of the present invention are achieved by an image reading method in which a peak level of an image signal, obtained by scanning an original document, is corrected based on a reference level, the image reading method comprising the steps of: providing a plurality of reading modes; receiving a selected one of the plurality of reading modes; and generating a reference level by computing a sum of a detection peak level and a correction value suited to the selected reading mode, so that the peak level of the image signal is corrected based on the generated reference level.

The above-mentioned objects of the present invention are achieved by an image reader including: an image sensor which reads an image from an original document; a shading correction unit which performs a shading correcting computation for an image signal supplied from the image sensor; a peak correction unit which performs a peak correcting computation for a shading corrected image signal output from the shading correction unit, so that a peak level of an image signal, obtained by scanning the original document, is corrected based on a reference level, wherein the peak correction unit latches a detection peak level, and generates a reference level by computing a sum of the detection peak level and a correction value suited to a selected reading mode, so that the peak level of the image signal is corrected based on the generated reference level.

The above-mentioned objects of the present invention are achieved by an image reader including: an image sensor which reads an image from an original document; an analog-to-digital converter which converts an analog image signal, output by the image sensor, into a digital image signal; a shading correction unit which performs a shading correcting computation for the image signal output by the analog-to-digital converter; and a peak correction unit which performs a peak correcting computation for the shading corrected image signal output by the shading correction unit, wherein the peak correction unit latches a detection peak level, and generates a reference level by computing a sum of the detection peak level and a correction value suited to a selected reading mode, so that the peak level of the image signal is corrected based on the generated reference level.

The above-mentioned objects of the present invention are achieved by a method of controlling an image reader, the image reader including at least an image sensor and a shading correction unit, the method comprising the steps of: reading an image from an original document by using the image sensor; performing a shading correcting computation for an image signal, supplied from the image sensor, by using the shading correction unit; performing a peak correcting computation for a shading corrected image signal output from the shading correction unit, so that a peak level of an image signal, obtained by scanning the original document, is corrected based on a reference level, wherein a reference white level is latched, and a reference level is generated by computing a sum of the reference white level and a correction value suited to a selected reading mode, so that the peak level of the image signal is corrected based on the generated reference level.

The above-mentioned objects of the present invention are achieved by a method of controlling an image reader, the image reader including at least an image sensor, an analog-to-digital converter and a shading correction unit, the method comprising the steps of: reading an image from an original document by using the image sensor; converting an analog image signal, output by the image sensor, into a digital image signal by using the analog-to-digital converter; performing a shading correcting computation for the image signal, output by the analog-to-digital converter, by using the chading correction unit; and performing a peak correcting computation for the shading corrected image signal output by the shading correction unit, wherein, in the peak correcting step, a detection peak level is latched, and a reference level is generated by computing a sum of the detection peak level and a correction value suited to a selected reading mode, so that the peak level of the image signal is corrected based on the generated reference level.

The above-mentioned objects of the present invention are achieved by an image processing system which processes an image read by an image reader, the image reader comprising: an image sensor which reads an image from an original document; a shading correction unit which performs a shading correcting computation for an image signal supplied from the image sensor; a peak correction unit which performs a peak correcting computation for a shading corrected image signal output from the shading correction unit, so that a peak level of an image signal, obtained by scanning the original document, is corrected based on a reference level, wherein the peak correction unit latches a detection peak level, and generates a reference level by computing a sum of the detection peak level and a correction value suited to a selected reading mode, so that the peak level of the image signal is corrected based on the generated reference level.

The above-mentioned objects of the present invention are achieved by an image processing system which processes an image read by an image reader, the image reader comprising: an image sensor which reads an image from an original document; an analog-to-digital converter which converts an analog image signal, output by the image sensor, into a digital image signal; a shading correction unit which performs a shading correcting computation for the image signal output by the analog-to-digital converter; and a peak correction unit which performs a peak correcting computation for the shading corrected image signal output by the shading correction unit, wherein the peak correction unit latches a detection peak level, and generates a reference level by computing a sum of the detection peak level and a correction value suited to a selected reading mode, so that the peak level of the image signal is corrected based on the generated reference level.

In the image reading method and apparatus of the present invention, a corresponding one of the plurality of reference levels for the selected reading mode is determined, and the peak level of the image signal is corrected based on the determined reference level. The image reading method and apparatus of the present invention are effective in preventing the inclusion of stains in the background portion of the reproduced image as well as the degradation of the reproduced image. It is possible for the present invention to provide appropriate quality of the reproduced image, which is suited to the selected reading mode, regardless of whether the read image contains noise components.

Other objects, features and advantages of the present invention will be apparent from the following detailed description of exemplary embodiments when read in conjunction with the accompanying drawings, in which:

FIG. 1 is a block diagram of a G3 facsimile system to which one embodiment of the present invention is applied.

FIG. 2 is a block diagram of an image signal processing portion of a scanner unit of the facsimile system to which a first preferred embodiment of the image reader of the invention is applied.

FIG. 3A, FIG. 3B and FIG. 3C are diagrams for explaining a shading correction process and a peak correction process performed by the image signal processing portion of the scanner unit.

FIG. 4A and FIG. 4B are diagrams for explaining an improved peak correction process performed by the image reader of the present embodiment.

FIG. 5A and FIG. 5B are diagrams for explaining another improved peak correction process performed by the image reader of the present embodiment.

FIG. 6 is a block diagram of a peak correction unit in the image reader of the present embodiment which is applied to the scanner unit of the facsimile system of FIG. 1.

FIG. 7 is a block diagram of another peak correction unit in the image reader of the present embodiment which is applied to the scanner unit of the facsimile system of FIG. 1.

FIG. 8 is a flowchart for explaining an improved peak correction routine which is executed to control the image reader of the present embodiment.

FIG. 9 is a flowchart for explaining another improved peak correction routine which is executed to control the image reader of the present embodiment.

FIG. 10 is a block diagram of an image signal processing portion of the scanner unit of the facsimile system to which a second preferred embodiment of the image reader of the invention is applied.

FIG. 11A and FIG. 11B are diagrams for explaining a shading correction process and a peak correction process performed by the image reader of the present embodiment.

FIG. 12 is a block diagram of a peak detecting unit in the image reader of the present embodiment which is applied to the scanner unit of the facsimile system of FIG. 1.

FIG. 13 is a block diagram of another peak detecting unit in the image reader of the present embodiment which is applied to the scanner unit of the facsimile system of FIG. 1.

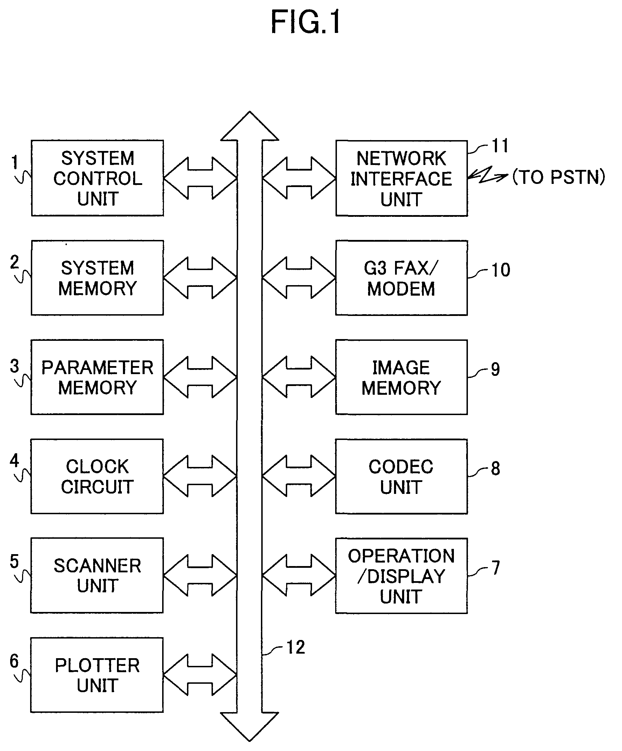

FIG. 1 shows a G3 facsimile system to which one preferred embodiment of the image reader of the present invention is applied.

As shown in FIG. 1, the G3 facsimile system generally includes a system control unit 1, a system memory 2, a parameter memory 3, a clock circuit 4, a scanner unit 5, a plotter unit 6, an operation/display unit 7, a coder/decoder (CODEC) unit 8, an image memory 9, a G3 fax/modem unit 10, and a network interface unit 11.

In the facsimile system of FIG. 1, the system control unit 1 controls the entire facsimile system and carries out the G3 facsimile transmission control procedure. The system memory 2 stores a control program which the system control unit 1 executes when performing the G3 facsimile transmission control procedure, and stores respective data needed to perform the G3 facsimile transmission control procedure. The system memory 2 provides work areas for the system control unit 1 when performing the G3 facsimile transmission control procedure.

The parameter memory 3 stores respective parameters and control information that are intrinsic to the G3 facsimile system. The clock circuit 4 outputs the current date and time information to the system control unit 1.

The scanner unit 5 reads an image from an original document at a given resolution, and outputs an image signal indicating the read image. An image signal processing portion of the scanner unit 5 constitutes the image reader according to the present invention.
The plotter unit 6 prints a reproduced image on a recording medium at a given resolution. The operation/display unit 7 includes respective operating keys, displays and indicators, which are used by the operator to manipulate the facsimile system.

The coder/decoder unit 8 provides the function of compression of an image signal to create encoded image data, and provides the function of decompression of the encoded image data to generate a reproduced image. The image memory 9 stores a plurality of encoded images created by the coder/decoder unit 8 from respective original documents read by the scanner unit 5.

The G3 fax/modem unit 10 provides modem functions for the G3 facsimile system. The G3 fax/modem unit 10 has the low-speed modem function (V.21) needed to send and receive the transmission protocol signals, and has the high-speed modem functions (V.17, V.34, V.29 and V.27ter) needed to primarily send and receive image information. The network interface unit 11 connects the G3 facsimile system to an analog public switched telephone network (PSTN) for telecommunications. The network interface unit 11 has the automatic dialing/call receiving functions.

In the facsimile system of FIG. 1, the above elements 1 through 11 are interconnected by an internal bus 12, and the transmission of data from one of the elements 1 through 11 to another is essentially performed by unit of the internal bus 12. Exceptionally, the transmission of data between the network interface unit 11 and the G3 fax/modem unit 10 is directly performed without using the internal bus 12.

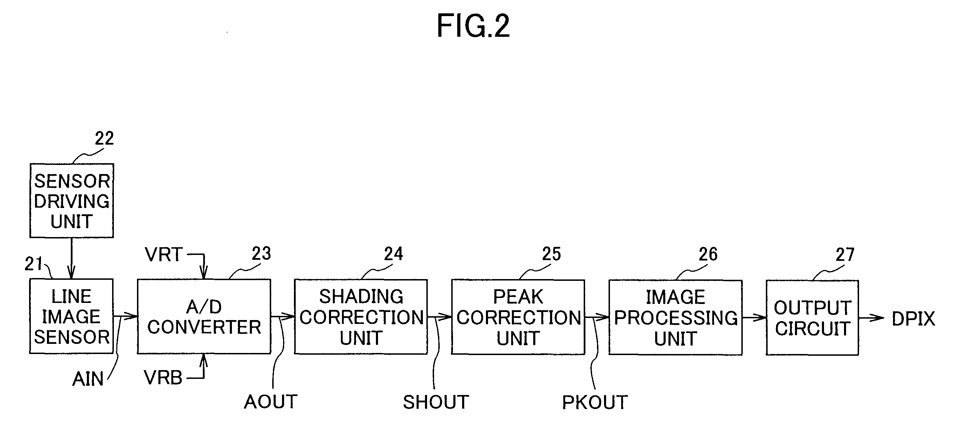

FIG. 2 shows an image signal processing portion of the scanner unit 5 of the G3 facsimile system to which a first preferred embodiment of the image reader of the invention is applied.

As shown in FIG. 2, a line image sensor 21 has a given scanning width (which is suited to, for example, the width of A4-size paper) and a given reading resolution. The line image sensor 21 optoelectrically reads one line of an image from an original document and outputs an analog image signal AIN, which indicates the optical intensity of the read image. A sensor driving unit 22 drives the line image sensor 21 at intervals of a given drive period. The analog image signal AIN, output by the line image sensor 21, is input to an analog-to-digital (A/D) converter 23.

The A/D converter 23 converts the analog image signal AIN into a digital image signal AOUT. A range of reference voltages available to the A/D converter 23 is determined by both a high-level reference voltage VRT and a low-level reference voltage VRB, which are supplied to the A/D converter 23. The digital image signal AOUT, output by the A/D converter 23, is input to a shading correction unit 24.

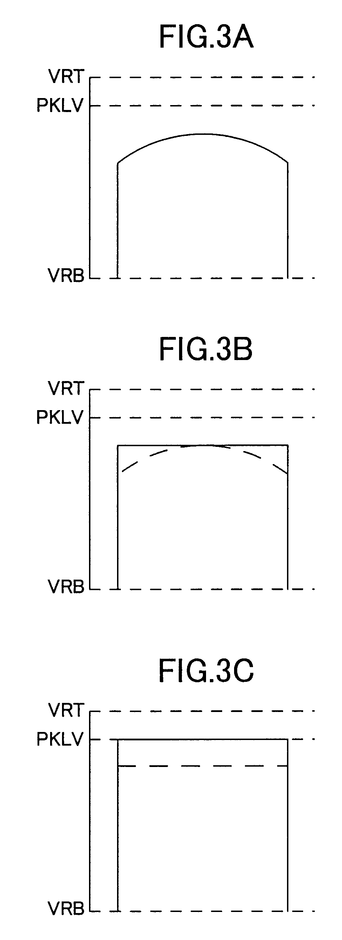

When an image having a uniform intensity in the entire area thereof (which is called a white reference waveform) is read from a blank document (e.g., a white sheet), the analog image signal AIN output by the line image sensor 21 indicates the distribution of optical intensity along the scanning line as shown in FIG. 3A. The distribution of optical intensity of the image signal AIN in the uniform intensity case is influenced by the input sensitivity and characteristics of the reading optical system and the line image sensor 21. The curve of the light quantity distribution of the image signal AIN in the uniform intensity case is generally convex in the central region due to such influences.

The shading correction unit 24 performs the shading correcting computation for the image signal AOUT in order to reduce the influences by the input sensitivity of the reading optical system and the line image sensor 21. As shown in FIG. 3B, the curve of the light quantity distribution of the image signal SHOUT output by the shading correction unit 24 is corrected so that the central region of the curve is flattened. The shading correcting computation is known, and a description thereof will be omitted.

The shading corrected image signal SHOUT that is output by the shading correction unit 24 is input to the peak correction unit 25.

The peak correction unit 25 performs the peak correction computation (or the proportional change) for the image signal SHOUT, so that a peak level of the peak corrected image signal PKOUT at the output of the peak correction unit 25 matches with a detection peak level PKLV which is latched by the peak correction unit 25. As shown in FIG. 3C, the peak of the light quantity distribution of the image signal PKOUT output by the peak correction unit 25 is corrected so that the peak of the image signal PKOUT matches with the detection peak level PKLV.

The peak corrected image signal PKOUT that is output by the peak correction unit 25 is input to the image processing unit 26. In the present embodiment, the number of bits of the shading corrected image signal SHOUT, which is input to the peak correction unit 25, is 10, while the number of bits of the peak corrected image signal PKOUT, which is output from the peak correction unit 25, is 9. Namely, the number of bits of the shading corrected image signal SHOUT is reduced as the result of performing the peak correction computation.

The image processing unit 26 performs some image processing computations for the peak corrected image signal PKOUT, and these computations include a gamma correcting computation, an MTF correcting computation and a bit-matched digitization. The gamma correcting computation is performed to correct the brightness of the image read by the image reader. The MFT correcting computation is performed to correct the blurring of the image read by the image reader. The bit-matched digitization is performed so that a resolution of the processed image matches with a resolution of an output image.

As the result of the above computations, the image processing unit 26 generates an output image signal DPIX having a predetermined number of bits. The output image signal DPIX that is output by the image processing unit 26 is supplied to a subsequent-stage unit through an output circuit 27. When transmitting image information from the facsimile system of FIG. 1, the subsequent-stage unit is the coder/decoder unit 8 and the output image signal DPIX is sent to the coder/decoder unit 8 via the internal bus 12. When printing a reproduced image in the facsimile system of FIG. 1, the subsequent-stage unit is the plotter unit 6 and the output image signal DPIX is sent to the plotter unit 6 via the internal bus 12.

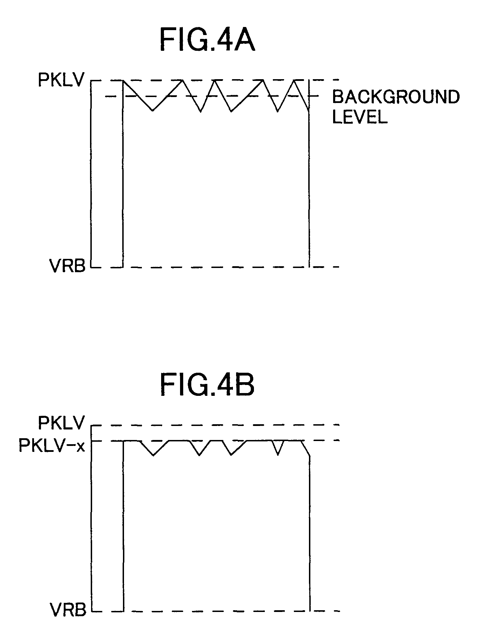

FIG. 4A and FIG. 4B show an improved peak correction process performed by the image reader of the present embodiment.

When the image signal AIN output by the line image sensor 21 or the image signal AOUT output by the A/D converter 23 is noisy, the distribution of optical intensity of the peak corrected image signal PKOUT in the case of the white reference waveform is as shown in FIG. 4A. The detection peak level PKLV that is latched by the peak correction unit 25 in this case includes the noise components of the image signal AIN or AOUT therein. As shown in FIG. 4A, the distribution of optical intensity of the image signal PKOUT includes irregularities due to the noise, some of which are higher than the optical intensity of the background portion of the image read by the image reader. For this reason, the reproduced image of the image signal PKOUT includes stains in the background portion thereof. This problem is called background staining.

As shown in FIG. 4B, in order to eliminate the above problem, the peak correction unit 25 in the image reader of the present embodiment corrects the detection peak level PKLV by subtracting a correction value "x" from the detection peak level PKLV, and uses the corrected peak level "PKLV-x" when performing the peak correcting computation. By performing such a correction process, the occurrence of the background staining in the reproduced image can be avoided.

It is known from experiments that the correction value "x" is in a range from 8/256 to 16/256 of the maximum intensity level of the shading corrected image signal SHOUT at the input of the peak correction unit 25. In the present embodiment, an appropriate correction value "x" is predetermined by experiment depending on the signal-to-noise (S/N) ratio of the line image sensor 21 and the S/N ratio of the A/D converter 23.

By performing the improved peak correction process, the irregularities of the distribution of optical intensity of the image signal PKOUT, if any, are not higher than the optical intensity of the background portion of the image read by the image reader. Therefore, the reproduced image of the image signal PKOUT includes no stain in the background portion thereof.

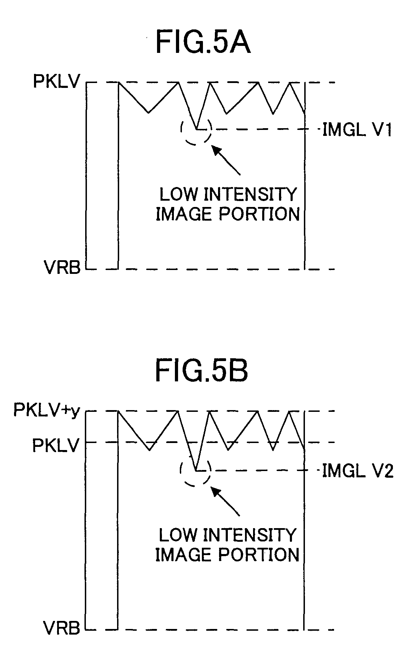

FIG. 5A and FIG. 5B show another improved peak correction process performed by the image reader of the present embodiment.

When an image having a low intensity image portion (or a low-contrast image) is read from the original document, the distribution of optical intensity of the peak corrected image signal PKOUT is as shown in FIG. 5A. The optical intensity IMGLVL1 of the low intensity image portion in this distribution is comparatively low, and the difference between the low intensity image portion and the noise components of the image signal PKOUT is likely to be negligible. For this reason, the low intensity image portion of the image signal PHOUT may be included in the noise components of the reproduced image. This will degrade the quality of the reproduced image.

As shown in FIG. SB, in order to eliminate the above problem, the peak correction unit 25 in the image reader of the present embodiment corrects the detection peak level PKLV by adding a correction value "y" to the detection peak level PKLV, and uses the corrected peak level "PKLV+y" in performing the peak correcting computation. By performing such a peak correction process, the degradation of the quality of the reproduced image can be avoided.

It is known from experiments that the correction value "y" is in a range from 8/256 to 16/256 of the maximum intensity level of the shading corrected image signal SHOUT at the input of the peak correction unit 25. In the present embodiment, an appropriate correction value "y" is predetermined by experiment depending on the signal-to-noise (S/N) ratio of the line image sensor 21 and the S/N ratio of the A/D converter 23.

According to the improved peak correction process, even when a low contrast image is read from the original document, the difference between the low intensity image portion and the noise components of the image signal PKOUT is made more appreciable. Therefore, the degradation of the reconstructed image from the image signal PKOUT can be avoided.

In the present embodiment, the G3 facsimile system is configured to allow the operator to select one of a plurality of reading modes, including a normal reading mode, a first reading mode and a second reading mode, before reading the image from the original document. Suppose that the peak levels "PKLV", "PKLV-x" and "PKLV+y" corresponding to the normal, first and second reading modes, respectively, are stored in the scanner unit 5 of the G3 facsimile system. When the first reading mode is selected by the operator, the improved peak correction process described above with reference to FIG. 4A and FIG. 4B is performed in the G3 facsimile system so as to eliminate the problem of the background staining. When the second reading mode is selected by the operator, the improved peak correction process described above with reference to FIG. 5A and FIG. 5B is performed in the G3 facsimile system so as to eliminate the problem of the low intensity image portion. When the normal reading mode is selected by the operator, the normal peak correction process described above with reference to FIG. 3C is performed in the G3 facsimile system.

Therefore, when one of the plurality of reading modes is selected by the operator, the image reader of the present embodiment can perform an appropriate one of the peak correction processes according to the selected reading mode, in order to increase the quality of the reproduced image.

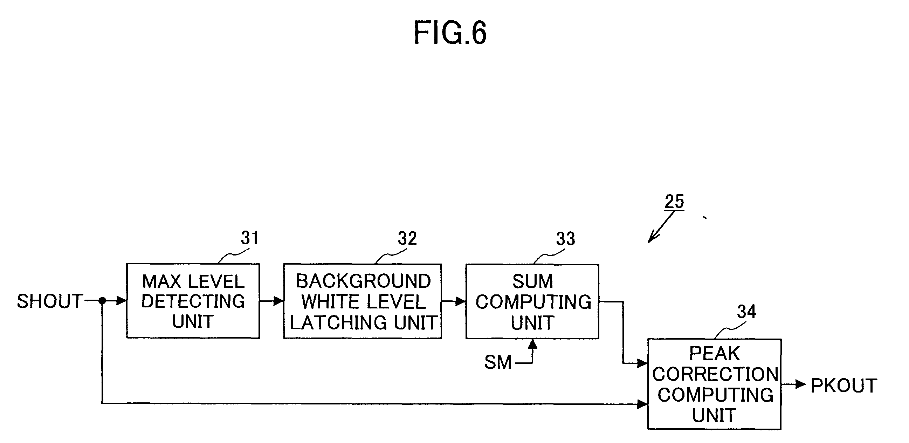

FIG. 6 shows an example of the peak correction unit 25 in the image reader of the present embodiment which is applied to the scanner unit of the facsimile system of FIG. 1. The peak correction unit 25 in this embodiment is adapted for appropriately reading a text image from an original document.

As shown in FIG. 6, the peak correction unit 25 in this embodiment generally includes a maximum level detecting unit 31, a background white level latching unit 32, a sum computing unit 33, and a peak correction computing unit 34.

The maximum level detecting unit 31 detects a peak level of the shading corrected image signal SHOUT which is supplied from the shading correction unit 24 (shown in FIG. 2) when the original document is optically scanned. The detected peak level output by the maximum level detecting unit 31 is input to the background white level latching unit 32. The background white level latching unit 32 latches the peak level of the image signal SHOUT.

The system control unit 1 (shown in FIG. 1) supplies a mode selection signal SM to the sum computing unit 33. When the first reading mode is selected by the operator, the sum computing unit 33 computes, in response to the selection signal SM, a sum of the latched peak level, received from the latching unit 32, and the correction value (-x), and outputs the sum to the peak correction computing unit 34 as the reference level "PKLV-x" for eliminating the problem of the background staining.

When the second reading mode is selected by the operator, the sum computing unit 33 computes, in response to the selection signal SM, a sum of the latched peak level and the correction value (+y), and outputs the sum to the peak correction computing unit 34 as the reference level "PKLV+y" for eliminating the problem of the low intensity image portion.

When the normal reading mode is selected by the operator, the sum computing unit 33 computes, in response to the selection signal SM, a sum of the latched peak level and the correction value (which is, in this case, equal to zero), and outputs the sum to the peak correction computing unit 34 as the reference level "PKLV".

The peak correction computing unit 34 performs the peak correction computation for the image signal SHOUT based on the reference level received from the sum computing unit 33, and outputs the peak corrected image signal PKOUT to the subsequent-stage unit which is described above with reference to FIG. 2.

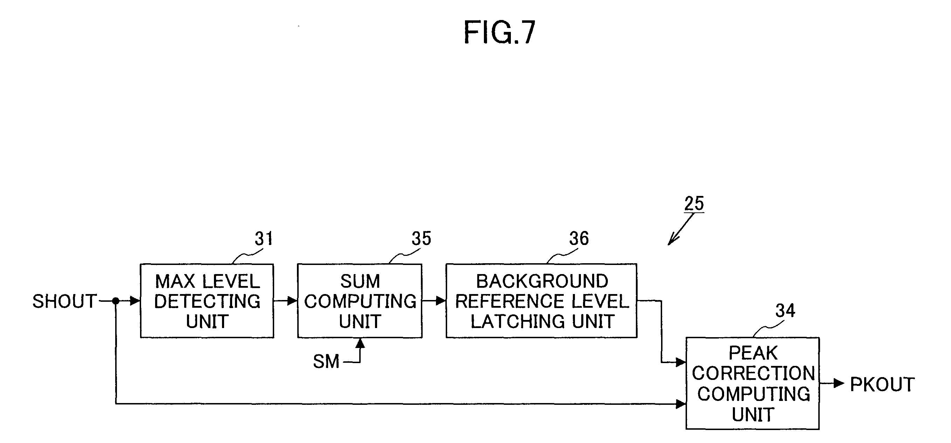

FIG. 7 shows another example of the peak correction unit 25 in the image reader of the present embodiment which is applied to the scanner unit 5 of the facsimile system of FIG. 1. The peak correction unit 25 in this embodiment is adapted for appropriately reading a halftone image from an original document.

As shown in FIG. 7, the peak correction unit 25 in this embodiment generally includes a maximum level detecting unit 31, a sum computing unit 35, a background reference level latching unit 36, and a peak correction computing unit 34.

The maximum level detecting unit 31 detects a peak level of the shading corrected image signal SHOUT which is supplied from the shading correction unit 24 when a white reference plate is optically scanned. The detected peak level output by the maximum level detecting unit 31 is input to the sum computing unit 35.

The system control unit 1 supplies a mode selection signal SM to the sum computing unit 35. When the first reading mode is selected by the operator, the sum computing unit 35 computes, in response to the selection signal SM, a sum of the detected peak level, received from the maximum level detecting unit 31, and the correction value (-x), and outputs the sum to the background reference level latching unit 36 as the reference level "PKLV-x" for eliminating the problem of the background staining.

When the second reading mode is selected by the operator, the sum computing unit 35 computes, in response to the selection signal SM, a sum of the detected peak level and the correction value (+y), and outputs the sum to the background reference level latching unit 36 as the reference level "PKLV+y" for eliminating the problem of the low intensity image portion.

When the normal reading mode is selected by the operator, the sum computing unit 35 computes, in response to the selection signal SM, a sum of the detected peak level and the correction value (which is, in this case, equal to zero), and outputs the sum to the background reference level latching unit 36 as the reference level "PKLV".

The background reference level latching unit 36 latches the reference level received from the sum computing unit 35.

The peak correction computing unit 34 performs the peak correction computation for the shading corrected image signal SHOUT, which is supplied from the shading correction unit 24 when reading the original document, based on the latched reference level received from the background reference level latching unit 36, and outputs the peak corrected image signal PKOUT to the subsequent-stage unit which is described above with reference to FIG. 2.

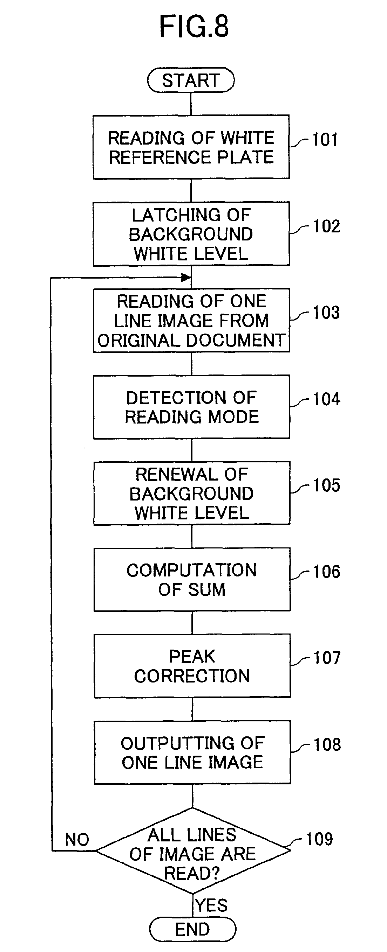

FIG. 8 shows an improved peak correction routine which is executed to control the image reader of the present embodiment. This peak correction routine is adapted for appropriately reading a text image from an original document.

As shown in FIG. 8, at a start of the improved peak correction routine, step 101 reads a white reference level signal by optically scanning a white reference plate (not shown) prior to the reading of the original document. Step 102 latches a peak level of the white reference level signal as the background white level.

After the step 102 is performed, the reading of the original document is started. Step 103 reads one line of an image by optically scanning the original document along a main scanning line outputs an analog image signal indicating the read image.

After the step 103 is performed, step 104 receives the mode selection signal SM from the system control unit 1 and detects a selected one of the plurality of reading modes, which is indicated by the received signal SM. Step 105 renews the background white level, which is latched in the step 102, by the peak level of the shading corrected image signal SHOUT received from the shading correction unit 24.

After the step 105 is performed, step 106 computes a sum of the renewed background white level (step 105) and the correction value in response to the reading mode indicated by the selection signal SM. In the step 106, when the first reading mode is selected, the sum of the renewed background white level and the correction value (-x) is computed as the reference level "PKLV-x" for eliminating the problem of the background staining. When the second reading mode is selected, the sum of the renewed background white level and the correction value (+y) is computed as the reference level "PKLV+y" for eliminating the problem of the low intensity image portion. When the normal reading mode is selected, the sum of the renewed background white level and the correction value (which is equal to zero) as the reference level "PKLV".

After the step 106 is performed, step 107 performs the peak correction computation for the image signal SHOUT based on the reference level obtained in the step 106. Step 108 outputs one line of the peak corrected image signal PKOUT to the subsequent-stage unit.

After the step 108 is performed, step 109 determines whether all lines of the image of the original document are optically scanned. When the result at the step 109 is negative, the above steps 103 through 108 are repeated. When the result at the step 109 is affirmative, the improved peak correction routine of FIG. 8 ends.

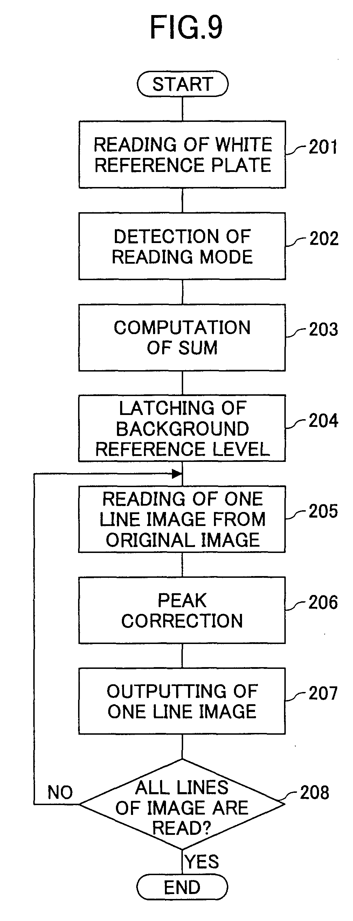

FIG. 9 shows another improved peak correction routine which is executed to control the image reader of the present embodiment. This peak correction routine is adapted for appropriately reading a halftone image from an original document.

As shown in FIG. 9, at a start of the improved peak correction routine, step 201 reads a white reference level signal by optically scanning a white reference plate (not shown) prior to the reading of the original document. In the step 201, a peak level of the white reference level signal is detected.

After the step 201 is performed, step 202 receives the mode selection signal SM from the system control unit 1 and detects a selected one of the plurality of reading modes, which is indicated by the received signal SM.

After the step 202 is performed, step 203 computes a sum of the detected peak level (step 201) and the correction value in response to the reading mode indicated by the selection signal SM. In the step 203, when the first reading mode is selected, the sum of the detected peak level and the correction value (-x) is computed as the reference level "PKLV-x" for eliminating the problem of the background staining. When the second reading mode is selected, the sum of the detected peak level and the correction value (+y) is computed as the reference level "PKLV+y" for eliminating the problem of the low intensity image portion. When the normal reading mode is selected, the sum of the detected peak level and the correction value (which is equal to zero) as the reference level "PKLV".

After the step 203 is performed, step 204 latches the sum of the detected peal level and the correction value as the background reference level.

After the step 204 is performed, the reading of the original document is started. Step 205 reads one line of an image by optically scanning the original document along a main scanning line and outputs an analog image signal indicating the read image.

After the step 205 is performed, step 206 performs the peak correction computation for the image signal SHOUT based on the latched background reference level. Step 207 outputs one line of the peak corrected image signal PKOUT to the subsequent-stage unit.

After the step 207 is performed, step 208 determines whether all lines of the image of the original document are optically scanned. When the result at the step 208 is negative, the above steps 205 through 207 are repeated. When the result at the step 208 is affirmative, the improved peak correction routine of FIG. 9 ends.

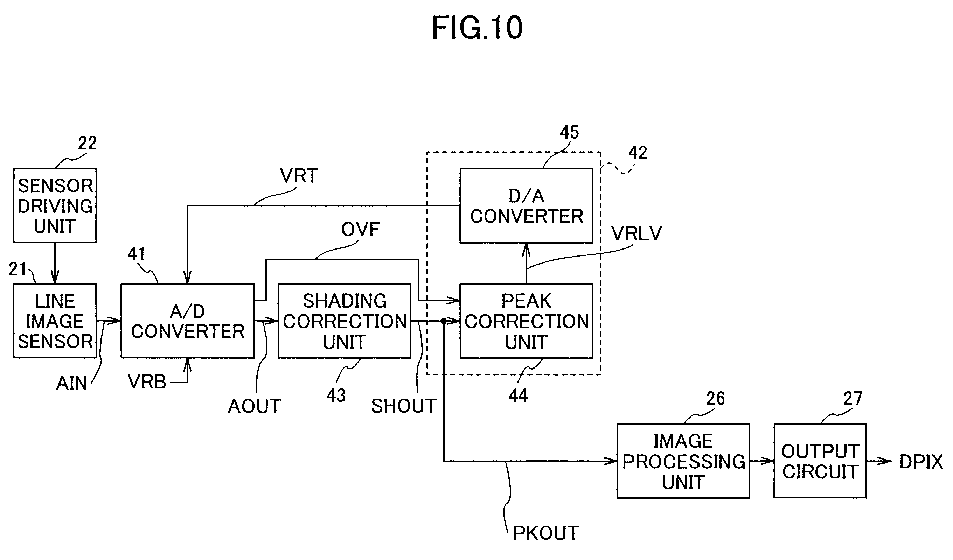

Next, FIG. 10 shows an image processing portion of the scanner unit 5 of the facsimile system to which a second preferred embodiment of the image reader of the invention is applied.

In FIG. 10, the elements that are essentially the same as corresponding elements in FIG. 2 are designated by the same reference numerals.

As shown in FIG. 10, the line image sensor 21 has a given scanning width (which is suited to, for example, the width of A4-size paper) and a given reading resolution. The line image sensor 21 optoelectrically reads one line of an image from an original document and outputs an analog image signal AIN, which indicates the optical intensity of the read image. The sensor driving unit 22 drives the line image sensor 21 at intervals of a given drive period. The analog image signal AIN, output by the line image sensor 21, is input to an analog-to-digital (A/D) converter 41.

The A/D converter 41 converts the analog image signal AIN into a digital image signal AOUT. A range of reference voltages available to the A/D converter 41 is determined by both a high-level reference voltage VRT and a low-level reference voltage VRB, which are supplied to the A/D converter 41. In the present embodiment, the high-level reference voltage VRT is sent from a digital-to-analog (D/A) converter 45 of a peak correction unit 42 to the A/D converter 41, which will be described below. The digital image signal AOUT, output by the A/D converter 41, is input to a shading correction unit 43. When the A/D converter 41 detects an overflow of the digital image signal AOUT, the A/D converter 41 outputs an overflow signal OVF to a peak detecting unit 44 of the peak correction unit 42.

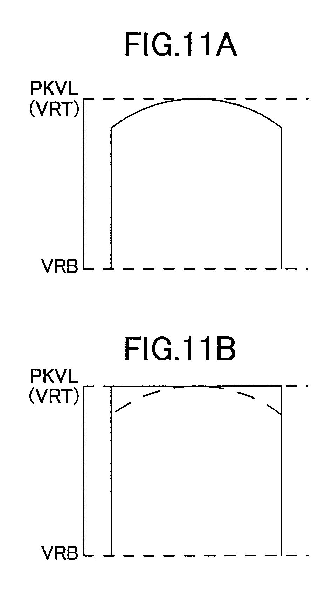

When an image having a uniform intensity in the entire area thereof (or a white reference waveform) is read from a blank document (e.g., a white sheet), the analog image signal AIN output by the line image sensor 21 indicates the distribution of optical intensity along the scanning line as shown in FIG. 11A. The distribution of optical intensity of the image signal AIN in the uniform intensity case is influenced by the input sensitivity and characteristics of the reading optical system and the line image sensor 21. The curve of the light quantity distribution of the image signal AIN in the uniform intensity case is generally convex in the central region due to such influences.

The shading correction unit 43 performs the shading correcting computation for the image signal AOUT in order to reduce the influences by the input sensitivity of the reading optical system and the line image sensor 21. As shown in FIG. 11B, the curve of the light quantity distribution of the image signal SHOUT output by the shading correction unit 43 is corrected so that the central region of the curve is flattened. The shading correcting computation is known, and a description thereof will be omitted.

The shading corrected image signal SHOUT that is output by the shading correction unit 43 is input to the peak detecting unit 44 of the peak correction unit 42. In the present embodiment, the shading corrected image signal SHOUT output by the shading correction unit 43 is already peak corrected because of the feedback loop (which will be described below), and it is supplied to the image processing unit 26 as the peak corrected image signal PKOUT.

In the peak correction unit 42, the peak detecting unit 44 detects a peak level of the shading corrected image signal SHOUT, and performs the peak correcting computation with respect to the detected peak level of the image signal SHOUT. As the result of the computation, the peak detecting unit 44 outputs a corrected peak level signal VRLV to the D/A converter 45, the digital signal VRLV indicating the corrected peak level obtained by the peak correcting computation. When the overflow signal OVF from the A/D converter 41 is received at the peak detecting unit 44, the peak detecting unit 44 renews the detected peak level by incrementing it by a given value.

In the peak correction unit 42, the D/A converter 45 converts the digital signal VRLV, received from the peak detecting unit 44, into an analog reference voltage signal VRT that is equivalent to the corrected peak level of the image signal SHOUT obtained at the peak detecting unit 44. The reference voltage signal VRT, which is output by the D/A converter 45, is input to the A/D converter 41.

As described above, the peak corrected image signal PKOUT that is output by the shading correction unit 43 is input to the image processing unit 26. The image processing unit 26 performs some image processing computations for the peak corrected image signal PKOUT, and these computations include a gamma correcting computation, an MTF correcting computation and a bit-matched digitization. The gamma correcting computation is performed to correct the brightness of the image read by the image reader. The MFT correcting computation is performed to correct the blurring of the image read by the image reader. The bit-matched digitization is performed so that a resolution of the processed image matches with a resolution of an output image.

As the result of the above computations, the image processing unit 26 generates an output image signal DPIX having a predetermined number of bits. The output image signal DPIX that is output by the image processing unit 26 is supplied to the subsequent-stage unit through the output circuit 27. When transmitting image information from the facsimile system of FIG. 1, the subsequent-stage unit is the coder/decoder unit 8 and the output image signal DPIX is sent to the coder/decoder unit 8 via the internal bus 12. When printing a reproduced image in the facsimile system of FIG. 1, the subsequent-stage unit is the plotter unit 6 and the output image signal DPIX is sent to the plotter unit 6 via the internal bus 12.

In the present embodiment, the reference voltage signal VRT, which is output by the peak correction unit 42, is equivalent to the corrected peak level of the image signal SHOUT obtained at the peak detecting unit 44. The reference voltage signal VRT is supplied from the peak correction unit 42 to the A/D converter 41. Because of the feedback loop including the peak correction unit 42 and the A/D converter 41, the image signal AOUT output by the A/D converter 41 is already peak corrected in the presence of the received reference voltage signal VRT, and it is supplied to the shading correction unit 43. Hence, the shading corrected image signal SHOUT output by the shading correction unit 43 is already peak corrected as shown in FIG. 11B.

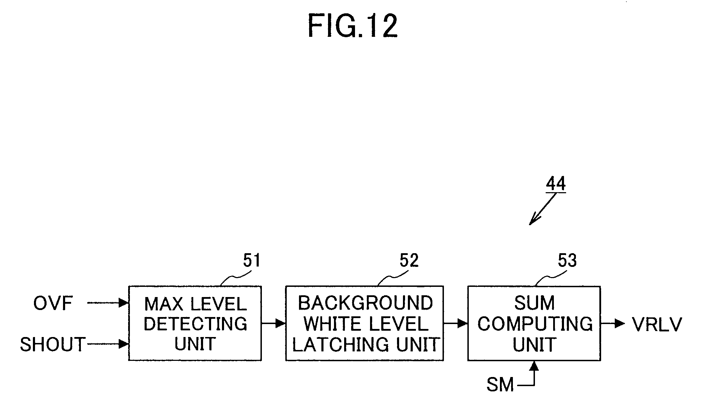

FIG. 12 shows an example of the peak detecting unit 44 in the image reader of the present embodiment which is applied to the scanner unit of the facsimile system of FIG. 1. The peak detecting unit 44 in this embodiment is adapted for appropriately reading a text image from an original document.

As shown in FIG. 12, the peak detecting unit 44 in this embodiment generally includes a maximum level detecting unit 51, a background white level latching unit 52, and a sum computing unit 53.

The maximum level detecting unit 51 detects a peak level of the shading corrected image signal SHOUT which is supplied from the shading correction unit 43 (shown in FIG. 10) when the original document is optically scanned. When the overflow signal OVF is received at the maximum level detecting unit 51, the maximum level detecting unit 51 renews the detected peak level by incrementing it by a given value. The detected peak level (or the renewed peak level) output by the maximum level detecting unit 51 is input to the background white level latching unit 52. The background white level latching unit 52 latches the detection peak level (PKLV) of the image signal SHOUT.

The system control unit 1 (shown in FIG. 1) supplies a mode selection signal SM to the sum computing unit 53. When the first reading mode is selected by the operator, the sum computing unit 53 computes, in response to the selection signal SM, a sum of the detection peak level PKLV, received from the latching unit 52, and the correction value (-x), and outputs the sum to the D/A converter 45 as the reference level "VRLV" (= PKLV-x) for eliminating the problem of the background staining.

When the second reading mode is selected by the operator, the sum computing unit 53 computes, in response to the selection signal SM, a sum of the detection peak level (PKLV) and the correction value (+y), and outputs the sum to the D/A converter 45 as the reference level "VRLV" (= PKLV+y) for eliminating the problem of the low intensity image portion.

When the normal reading mode is selected by the operator, the sum computing unit 53 computes, in response to the selection signal SM, a sum of the detection peak level (PKLV) and the correction value (which is, in this case, equal to zero), and outputs the sum to the D/A converter 45 as the reference level "VRLV" (= PKLV).

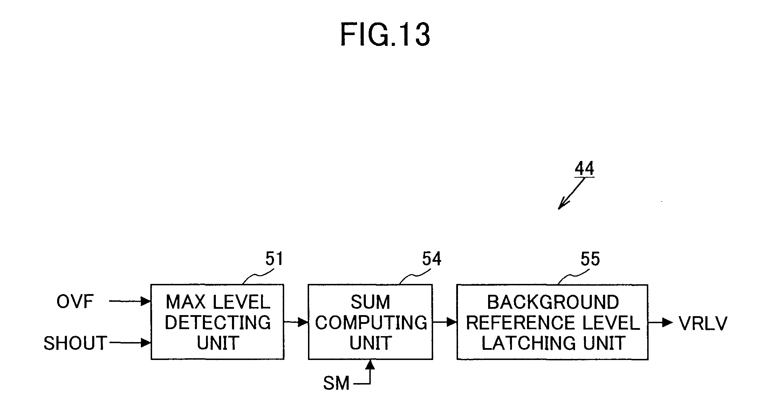

FIG. 13 shows another example of the peak detecting unit 44 in the image reader of the present embodiment which is applied to the scanner unit 5 of the facsimile system of FIG. 1. The peak detecting unit 44 in this embodiment is adapted for appropriately reading a halftone image from an original document.

As shown in FIG. 13, the peak detecting unit 44 in this embodiment generally includes a maximum level detecting unit 51, a sum computing unit 54, and a background reference level latching unit 55.

The maximum level detecting unit 51 detects a peak level of the shading corrected image signal SHOUT which is supplied from the shading correction unit 43 when a white reference plate is optically scanned. When the overflow signal OVF is received at the maximum level detecting unit 51, the maximum level detecting unit 51 renews the detected peak level by incrementing it by a given value. The detected peak level (or the renewed peak level) output by the maximum level detecting unit 51 is input to the sum computing unit 54.

The system control unit 1 supplies a mode selection signal SM to the sum computing unit 54. When the first reading mode is selected by the operator, the sum computing unit 54 computes, in response to the selection signal SM, a sum of the detected peak level, received from the maximum level detecting unit 51, and the correction value (-x), and outputs the sum to the background reference level latching unit 55 as the reference level "VRLV" (= PKLV-x) for eliminating the problem of the background staining.

When the second reading mode is selected by the operator, the sum computing unit 54 computes, in response to the selection signal SM, a sum of the detected peak level and the correction value (+y), and outputs the sum to the background reference level latching unit 55 as the reference level "VRLV" (= PKLV+y) for eliminating the problem of the low intensity image portion.

When the normal reading mode is selected by the operator, the sum computing unit 54 computes, in response to the selection signal SM, a sum of the detected peak level and the correction value (which is, in this case, equal to zero), and outputs the sum to the background reference level latching unit 55 as the reference level "VRLV" (= PKLV).

The background reference level latching unit 55 latches the reference level "VRLV" received from the sum computing unit 54. The latched reference level "VRLV" is supplied from the background reference level latching unit 55 to the D/A converter 45.

As for the detection of the background white level, there are two different situations: in the former situation, the background white level is detected only when the white reference plate is optically scanned; and, in the latter situation, the background white level is detected and renewed occasionally during the scanning of the original document. In the latter situation, each time the overflow signal OVF is not received, the latched background white level is decremented.

In the above-described embodiment, the peak level of the image signal which is supplied when the white reference plate is optically scanned is detected, and it is directly used in the peak correcting computation. However, when a reflection coefficient of the white reference plate is significantly different from a reflection coefficient of the original document, the detected peak level may be changed by a given value and the changed peak level may be used in the peak correcting computation.

In the above-described embodiment, the image reader of the invention is applied to the G3 facsimile system. The present invention is not limited to these embodiments. Alternatively, the present invention may be applicable to other image processing systems.

In the above-described embodiment, the number of bits of the shading corrected image signal SHOUT, which is input to the peak correction unit 25, is 10, while the number of bits of the peak corrected image signal PKOUT, which is output from the peak correction unit 25, is 9. The reason why the number of bits of the shading corrected image signal SHOUT is reduced is that the result of the peak correction computation can be easily and properly truncated and the output of improper image data is avoided.

The present invention is not limited to the above-described embodiment, and variations and modifications may be made without departing from the scope of the present invention.

Further, the present invention is based on Japanese priority application No.2000-228695, filed on July 28, 2000, the entire contents of which are hereby incorporated by reference.

## Claims

1. An image reading method in which a peak level of an image signal, obtained by scanning an original document, is corrected based on a reference level, comprising the steps of:
providing a plurality of reading modes;
receiving a selected one of the plurality of reading modes; and
generating a reference level by computing a sum of a detection peak level and a correction value suited to the selected reading mode, so that the peak level of the image signal is corrected based on the generated reference level.

2. The image reading method of claim 1, **characterized in that**, in said generating step, the detection peak level is reduced so as to match with an optical intensity of a background portion of an image read from the orignal document.

3. The image reading method of claim 1, **characterized in that**, in said generating step, the detection peak level is increased so as to allow a low intensity image portion of an image, read from the original document, to have an appreciable difference in optical intensity.

4. An image reader including:
an image sensor reading an image from an original document;
a shading correction unit performing a shading correcting computation for an image signal supplied from the image sensor;
a peak correction unit performing a peak correcting computation for a shading corrected image signal output from the shading correction unit, so that a peak level of an image signal, obtained by scanning the original document, is corrected based on a reference level,
**characterized in that** the peak correction unit latches a detection peak level, and generates a reference level by computing a sum of the detection peak level and a correction value suited to a selected reading mode, so that the peak level of the image signal is corrected based on the generated reference level.

5. The image reader of claim 4, **characterized in that** the peak correction unit renews a reference white level by using a background white level of the image signal that is detected when reading the original document.

6. An image reader including:
an image sensor reading an image from an original document;
an analog-to-digital converter converting an analog image signal, output by the image sensor, into a digital image signal;
a shading correction unit performing a shading correcting computation for the image signal output by the analog-to-digital converter; and
a peak correction unit performing a peak correcting computation for the shading corrected image signal output by the shading correction unit,
**characterized in that** the peak correction unit latches a detection peak level, and generates a reference level by computing a sum of the detection peak level and a correction value suited to a selected reading mode, so that the peak level of the image signal is corrected based on the generated reference level.

7. The image reader of claim 6, **characterized in that** the peak correction unit comprises a latching unit which latches a peak level of the image signal, supplied from the shading correction unit when a white reference plate is scanned, as a background reference level.

8. The image reader of claim 6 or 7, **characterized in that** the peak correction unit comprises a latching unit which latches a peak level of the image signal, supplied from the shading correction unit when the original document is scanned, as a background white level.

9. The image reader of claim 6, **characterized in that** the peak correction unit comprises:
a latching unit which latches a peak level of the image signal, supplied from the shading correction unit when a white reference plate is scanned, as a background reference level; and
a reference voltage supply unit which supplies a reference voltage signal, indicating a corrected peak level of the image signal, to the analog-to-digital conveter.

10. The image reader of claim 6 or 7, **characterized in that** the peak correction unit renews a reference white level by using a background white level of the image signal that is detected when reading the original document.

11. The image reader of claim 6, 7, 8, 9 or 10, **characterized in that** the correction value is predetermined based on a signal-to-noise ratio of the image sensor.

12. The image reader of any one of claims 6 to 11, **characterized in that** the correction value is predetermined based on a signal-to-noise ratio of the analog-to-digital converter.

13. The image reader of any one of claims 6 to 12, **characterized in that** the image reader further comprises a control unit for supplying a mode selection signal to the peak correction unit, the mode selection signal indicating that selected reading mode that is selected by an operator from among a plurality of reading modes,
wherein the peak correction unit reduces, in response to the mode selection signal, the detection peak level so as to match with an optical intensity of a background portion of an image read from the original document.

14. The image reader of any one of claims 6 to 13, **characterized in that** the image reader further comprises a control unit for supplying a mode selection signal to the peak correction unit, the mode selection signal indicating that selected reading mode that is selected by am operator from among a plurality of reading modes,
wherein the peak correction unit increases, in response to the mode selection signal, the detection peak level so as to allow a low intensity image portion of an image, read from the original document, to have an appreciable difference in optical intensity.

15. The image reader of any one of claims 6 to 14, **characterized in that** the number of bits of a digital image signal, input to the peak correction unit, is larger than the number of bits of a digital image signal output by the peak correction unit.

16. A method of controlling an image reader, the image reader including at least an image sensor and a shading correction unit, the method comprising the steps of:
reading an image from an original document by using the image sensor;
performing a shading correcting computation for an image signal, supplied from the image sensor, by using the shading correction unit; and
performing a peak correcting computation for a shading corrected image signal output from the shading correction unit, so that a peak level of an image signal, obtained by scanning the original document, is corrected based on a reference level,
**characterized in that** a reference white level is latched, and a reference level is generated by computing a sum of the reference white level and a correction value suited to a selected reading mode, so that the peak level of the image signal is corrected based on the generated reference level.

17. The method of claim 16, **characterized in that** the reference white level is renewed by using a background white level of the image signal that is detected when reading the original document.

18. A method of controlling an image reader, the image reader including at least an image sensor, an analog-to-digital converter, and a shading correction unit, the method comprising the steps of:
reading an image from an original document by using the image sensor;
converting an analog image signal, output by the image sensor, into a digital image signal by using the analog-to-digital converter;
performing a shading correcting computation for the image signal, output by the analog-to-digital converter, by using the shading correction unit; and
performing a peak correcting computation for the shading corrected image signal output by the shading correction unit,
**characterized in that**, in the peak correcting step, a detection peak level is latched, and a reference level is generated by computing a sum of the detection peak level and a correction value suited to a selected reading mode, so that the peak level of the image signal is corrected based on the generated reference level.

19. The method of claim 18, **characterized in that**, in the peak correcting step, a peak level of the image signal, supplied from the shading correction unit when a white reference plate is scanned, is latched as a background reference level.

20. The method of claim 18 or 19, **characterized in that**, in the peak correcting step, a peak level of the image signal, supplied from the shading correction unit when the original document is scanned, is latched as a background white level.

21. The method of claim 18, 19 or 20, **characterized in that**, in the peak correcting step, a peak level of the image signal, supplied from the shading correction unit when a white reference plate is scanned, is latched as a background reference level, and a reference voltage signal, indicating a corrected peak level of the image signal, is supplied to the analog-to-digital converter.

22. The method of claim 18, 19, 20 or 21, **characterized in that** the correction value is predetermined based on a signal-to-noise ratio of the image sensor.

23. The method of any one of claims 18 to 22, **characterized in that** the correction value is predetermined based on a signal-to-noise ratio of the analog-to-digital converter.

24. The method of any one of claims 18 to 23, **characterized in that**, in the peak correcting step, a reference white level is renewed by using a background white level of the image signal that is detected when reading the original document.

25. An image processing system which processes an image read by an image reader, the image reader comprising:
an image sensor reading an image from an original document;
a shading correction unit performing a shading correcting computation for an image signal supplied from the image sensor; and
a peak correction unit performing a peak correcting computation for a shading corrected image signal output from the shading correction unit, so that a peak level of an image signal, obtained by scanning the original document, is corrected based on a reference level,
**characterized in that** the peak correction unit latches a detection peak level, and generates a reference level by computing a sum of the detection peak level and a correction value suited to a selected reading mode, so that the peak level of the image signal is corrected based on the generated reference level.

26. The image processing system of claim 25, **characterized in that** the peak correction unit renews a reference white level by using a background white level of the image signal that is detected when reading the original document.

27. An image processing system which processes an image read by an image reader, the image reader comprising:
an image sensor reading an image from an original document;
an analog-to-digital converter converting an analog image signal, output by the image sensor, into a digital image signal;
a shading correction unit performing a shading correcting computation for the image signal output by the analog-to-digital converter; and
a peak correction unit performing a peak correcting computation for the shading corrected image signal output by the shading correction unit,
**characterized in that** the peak correction unit latches a detection peak level, and generates a reference level by computing a sum of the detection peak level and a correction value suited to a selected reading mode, so that the peak level of the image signal is corrected based on the generated reference level.

28. The image processing system of claim 27, **characterized in that** the peak correction unit comprises a latching unit which latches a peak level of the image signal, supplied from the shading correction unit when a white reference plate is scanned, as a background reference level.

29. The image processing system of claim 27 or 28, **characterized in that** the peak correction unit comprises a latching unit which latches a peak level of the image signal, supplied from the shading correction unit when the original document is scanned, as a background white level.

30. The image processing system of claims 27 to 29, **characterized in that** the peak correction unit comprises:
a latching unit which latches a peak level of the image signal, supplied from the shading correction unit when a white reference plate is scanned, as a background reference level; and
a reference voltage supply unit which supplies a reference voltage signal, indicating a corrected peak level of the image signal, to the analog-to-digital converter.

31. The image processing system of any one of claims 27 to 30, **characterized in that** the peak correction unit renews a reference white level by using a background white level of the image signal that is detected when reading the original document.

32. The image processing system of any one of claims 27 to 31, **characterized in that** the peak correction unit renews a reference white level by using a background white level of the image signal that is detected when reading the original document.

33. The image processing system of any one of claims 27 to 32, **characterized in that** the correction value is predetermined based on a signal-to-noise ratio of the image sensor.

34. The image processing system of any one of claims 27 to 33, **characterized in that** the correction value is predetermined based on a signal-to-noise ratio of the analog-to-digital converter.

35. The image processing system of any one of claims 27 to 34, **characterized in that** the image reader further comprises a control unit supplying a mode selection signal to the peak correction unit, the mode selection signal indicating that selected reading mode that is selected by an operator from among a plurality of reading modes,
wherein the peak correction unit reduces, in response to the mode selection signal, the detection peak level so as to match with an optical intensity of a background portion of an image read from the original document.

36. The image processing system of any one of claims 27 to 35, **characterized in that** the image reader further comprises a control unit supplying a mode selection signal to the peak correction unit, the mode selection signal indicating that selected reading mode that is selected by an operator from among a plurality of reading modes,
wherein the peak correction unit increases, in response to the mode selection signal, the detection peak level sl as to allow a low intensity image portion of an image, read from the original document, to have an appreciable difference in optical intensity.

37. The image processing system of any one of claims 27 to 36, **characterized in that** the number of bits of a digital image signal, input to the peak correction unit, is larger than the number of bits of a digital image signal output by the peak correction unit.
